# EUROPEAN PATENT SPECIFICATION

(11) **EP 3 787 206 B1**
(45) Date of publication and mention of the grant of the patent: **30.07.2025**
(21) Application number: 19802511.6
(22) Date of filing: 13.05.2019
(51) Int. Cl.: H04L 1/00, H04J 14/02, H04Q 11/00

(54) **DATA PROCESSING METHOD AND DEVICE AND COMMUNICATION SYSTEM GENERATING A CODEWORD STRUCTURE COMPRISING OAM INFORMATION**
VERFAHREN UND GERÄT ZUR DATENVERARBEITUNG UND KOMMUNIKATIONSSYSTEM ZUR ERZEUGUNG EINER CODEWORTSTRUKTUR MIT OAM-INFORMATIONEN
MÉTHODE DE TRAITEMENT DES DONNÉES, DISPOSITIF ET SYSTÈME DE COMMUNICATION GÉNÉRANT UNE STRUCTURE DE MOTS DE CODES COMPRENANT DES INFORMATIONS OAM

(30) Priority: 16.05.2018 CN 201810470333
(43) Date of publication of application: 03.03.2021
(73) Proprietor: HUAWEI TECHNOLOGIES CO., LTD., Shenzhen, Guangdong 518129 (CN)
(72) Inventor: WU, Xuming, Shenzhen, Guangdong 518129 (CN); YE, Zhicheng, Shenzhen, Guangdong 518129 (CN); NIE, Shiwei, Shenzhen, Guangdong 518129 (CN); GAO, Bo, Shenzhen, Guangdong 518129 (CN); JING, Lei, Shenzhen, Guangdong 518129 (CN)
(74) Representative: Maiwald GmbH
(86) International application number: PCT/CN2019/086631
(87) International publication number: WO 2019/218965

(56) References cited:
- EP-A1- 2 224 632
- CN-A- 101 227 450
- CN-A- 107 113 288
- US-A1- 2003 115 529
- US-A1- 2009 190 595
- US-A1- 2016 134 392
- US-A1- 2017 012 738
- CHEN QICHANG: "ETN - Ethernet Transport Network for 5G Mobile Transport, Metro, and DCI Network", 2018 IEEE INTERNATIONAL CONFERENCE ON COMMUNICATION SYSTEMS (ICCS, 19 December 2018 (2018-12-19) - 21 December 2018 (2018-12-21), pages 332 - 336, XP033536268

## Description

### TECHNICAL FIELD

This application relates to the communications field, and more specifically, to a data processing method and apparatus, and a communications system.

### BACKGROUND

With a sharply increasing demand for user data, 10G passive optical networks (Passive Optical Network, PON) have entered a stage of large-scale deployment, and next-generation PON system standards are also being gradually formulated and improved. Next-generation mobile communications standards, namely, 5G standards have also been basically completed. As higher requirements for a rate and system latency are raised, 5G communications has higher requirements for bearer networks. With the development of base stations towards small cells (small cell), coverage density is increasing, and a demand for optical fiber resources is also increasing. Therefore, bearer networks at low costs and with in-depth coverage are required. In a wide context of optical network city construction, PON-based broadband access networks have been deployed on a large scale, and massive optical fibers have been extended to a user side, matching coverage of small cells.
United States patent application US 2016/0134392 A1 discloses an apparatus comprising a 64b66b encoder. It is disclosed that OAM information can be communicated by replacing padding bits or alternatively can be communicated by selecting a synchronisation sequence.
United States patent application US 2009/0190595 A1 discloses a method for sending overhead information.

US 2003/115529 A1 (OHIRA MASAKI [JP] ET AL) 19 June 2003 (2003-06-19) discloses that an indicator can be sent from the encoder to the decoder indicating whether encoding has been performed and whether it is necessary to perform a decoding operation at the receiver.

Currently, China Telecom and China Unicom are promoting the formulation of standards and solutions of wavelength division multiplexing (Wavelength Division Multiplexing, WDM) PON for 5G bearer networks.

### SUMMARY

In view of this, this application provides a data processing method, a data processing apparatus, a communications device, and a communications system.

The invention is set out in the appended set of claims.

### BRIEF DESCRIPTION OF DRAWINGS

FIG. 1 is a schematic architectural diagram of a communications system according to an embodiment of this application;
FIG. 2 is another schematic architectural diagram of a communications system according to an embodiment of this application;
FIG. 3 is a schematic architectural diagram of a communications system in which a WDM PON is used to carry 5G services according to an embodiment of this application;
FIG. 4 is a schematic flowchart of FEC encoding according to an embodiment of this application;
FIG. 5 is an used as an example flowchart of a data encoding and decoding method according to an embodiment of this application;
FIG. 6 is an used as an example flowchart of a data processing method according to an embodiment of this application;
FIG. 7 is a schematic diagram of a hardware structure of a communications device according to an embodiment of this application;
FIG. 8 is a schematic diagram of an used as an example functional module of a data processing apparatus according to an embodiment of this application;
FIG. 9 is a schematic diagram of another used as an example functional module of a data processing apparatus according to an embodiment of this application; and
FIG. 10 is a schematic diagram of another used as an example functional module of a data processing apparatus according to an embodiment of this application.

### DESCRIPTION OF EMBODIMENTS

To make the invention objectives, features, and advantages of this application clearer and more comprehensible, the following clearly and completely describes the technical solutions in the embodiments of this application with reference to the accompanying drawings in the embodiments of this application. Apparently, the embodiments described in the following are merely a part rather than all of the embodiments of this application. All other embodiments obtained by a person of ordinary skill in the art based on the embodiments of this application without creative efforts shall fall within the protection scope of this application.

The technical solutions in the embodiments of this application may be applied to various communications systems, and for example, may be applied to various point-to-point and point-to-multipoint Ethernet communications systems.

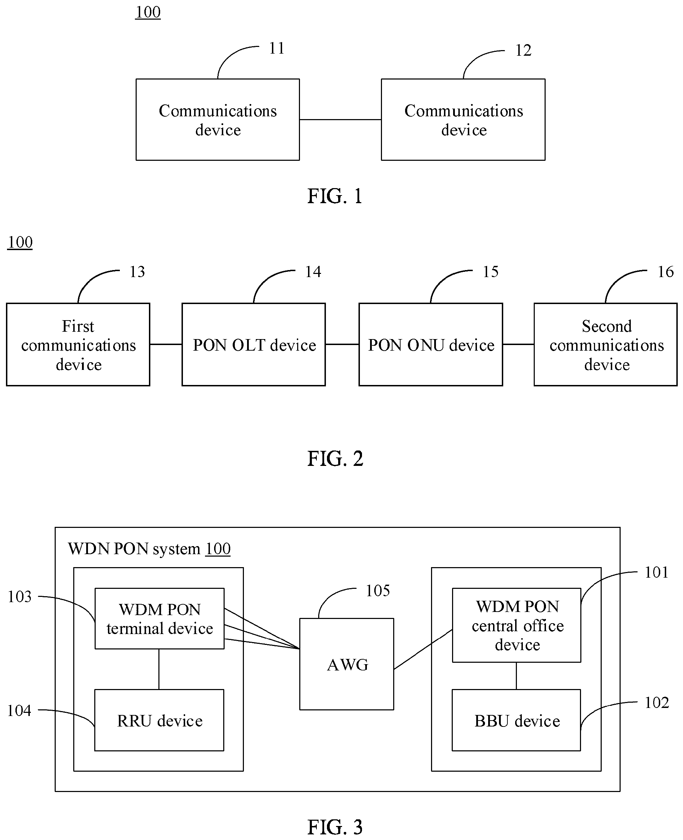

FIG. 1 is a schematic architectural diagram of a communications system 100 that is applicable to the embodiments of this application. The communications system 100 includes two communications devices (11 and 12) that communicate with each other. The two communications devices (11 and 12) may be connected by using a physical medium such as an optical fiber. Data transmitted between the two communications devices (11 and 12) may be data on which FEC encoding is performed. It may be that either communications device in FIG. 1 performs FEC encoding to generate a code word structure, and sends the code word structure to the other communications device, and the other communications device performs FEC decoding on the code word structure.

FIG. 2 is another schematic architectural diagram of a communications system 100 that is applicable to the embodiments of this application. The communications system 100 includes a first communications device 13, a PON optical line terminal (Optical Line Terminal, OLT) device 14, a PON optical network unit (Optical Network Unit, ONU) device 15, and a second communications device 16.

Upstream transmission is used as an example. Data sent by the second communications device 16 to the PON ONU device 15 may be data on which forward error correction (Forward Error Correction, FEC) encoding is performed.

In an example, the PON ONU device 15 may not perform FEC encoding on data, and the PON OLT device 14 may not perform FEC decoding on the data either, but the first communications device 13 performs FEC decoding.

In another example, the PON ONU 15 may first perform FEC decoding, and then perform FEC encoding again, and send re-encoded data to the PON OLT device 14. The PON OLT device 14 may first perform FEC decoding (a decoding manner is consistent with an FEC encoding manner of the PON ONU device 15), and then send data generated after FEC decoding to the first communications device. Alternatively, FEC encoding may be first performed again on data generated after FEC decoding, and encoded data is sent to the first communications device 13, so that the first communications device 13 performs FEC decoding.

Alternatively, data sent by the second communications device 16 to the PON ONU device 15 may be data on which FEC encoding is not performed. In this case, the PON ONU 15 performs FEC encoding on the received data, and sends encoded data to the PON OLT device 14. The PON OLT device 14 performs FEC decoding on the received data, and then sends the data to the first communications device 13.

Downstream transmission is similar to upstream transmission. The first communications device 13 may perform FEC encoding, the second communications device 16 performs FEC decoding, and the PON OLT 14 and the PON ONU 15 do not perform FEC encoding and decoding. Alternatively, the PON OLT 14 may perform FEC encoding, the PON ONU 15 performs FEC decoding, and the first communications device 13 and the second communications device 16 do not perform FEC encoding and decoding. Alternatively, the first communications device 13 may perform FEC encoding, the second communications device 16 performs FEC decoding, the PON OLT 14 performs decoding first and then performs FEC encoding again, and the PON ONU 15 performs FEC decoding or performs decoding first and then performs FEC encoding again.

This application may also be applied to a WDM PON system that carries 5G services. FIG. 3 is a schematic architectural diagram of a communications system that is applicable to the embodiments of this application and in which a WDM PON is used to carry 5G services. As shown in FIG. 3, the communications system 100 includes a PON central office device 101 (for example, an OLT), a baseband unit (baseband unit, BBU) device 102 connected to the PON central office device 101, a PON terminal device 103 (for example, an ONU), and a RRU device 104 connected to the PON terminal device 103. An arrayed waveguide grating (Arrayed Waveguide Grating, AWG) 105 (or may be an optical splitter) is connected between the PON central office device 101 and the PON terminal device. It may be that the PON central office device 101 performs FEC encoding, and the PON terminal device 103 performs FEC decoding; or that the PON terminal device 103 performs FEC encoding, and the PON central office device 101 performs FEC decoding. Alternatively, the BBU device performs FEC encoding and decoding, and the PON central office device 101 and the PON ONU-end device 103 may not perform FEC encoding and decoding. Alternatively, the BBU device performs FEC encoding and decoding; the PON central office device 101 performs decoding first, and then performs FEC encoding; and the PON terminal device 103 performs FEC decoding, or performs decoding first, and then performs FEC encoding again. Alternatively, the BBU device performs FEC encoding and decoding; the PON terminal device 103 performs decoding first, and then performs FEC encoding; and the PON central office device 101 performs FEC decoding, or performs decoding and then performs FEC encoding again.

Thanks to its features, such as a low latency and a high bandwidth, the WDM PON can be used to carry eCRPI services. Operators have the following requirements for the WDM PON: 1. a low latency for wireless services and transparent transmission of wireless services; 2. the system can provide an OAM function and implement management and diagnosis of a PON network; 3. a rate of 25 Gbit/s is supported.

It may be understood that the architectures shown in FIG. 1 to FIG. 3 are merely examples, and are not intended to limit the protection scope of this application. The communications system in this application may also use another architecture form.

A communication rate that can be supported by the communications system in this embodiment of this application may be 25 Gbit/s, 100 Gbit/s, or the like, or may be another rate, which is not limited herein.

The technical solutions of the embodiments of this application described in the following may be executed by either communications device in FIG. 1, or may be executed by the PON OLT device and the PON ONU device in FIG. 2 and FIG. 3. For ease of description, in the following, a device used as a sender is referred to as a source network device, and a device used as a receiver is referred to as a target network device.

The source network device and the target network device may include a processing module. The processing module may be a MAC (Media Access Control, media access control) chip, a processor, a DSP (digital signal processor, digital signal processor), or the like. The processing module performs an operation at a physical coding sublayer (Physical Coding Sublayer, PCS). The following uses an example in which the MAC chip performs an operation at the physical coding sublayer.

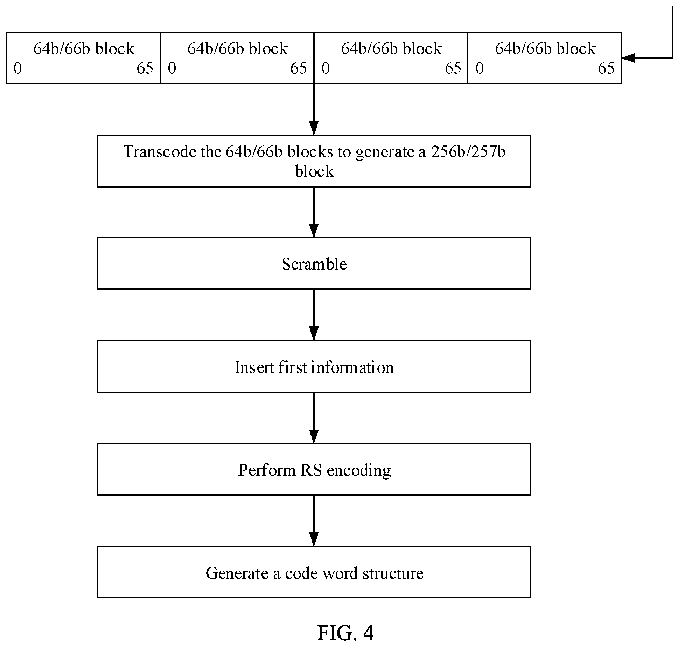

When the source network device performs FEC encoding and the target network device performs FEC decoding, FIG. 4 is a schematic flowchart of FEC encoding according to an embodiment of the present invention. User data from a MAC layer may be transcoded at the physical coding sublayer first, and then is scrambled; then an idle character in the user data is periodically deleted; and then a piece of first information (which may also be referred to as a code word marker, or a code marker) is periodically inserted. A length of the deleted idle character is the same as a length of the piece of first information to be inserted, which can ensure that a line rate does not change. FEC encoding is performed on the inserted first information and the user data together, to form a complete FEC code word.

It may be understood that the first information in this application may have another name, which does not limit the protection scope of the first information.

One FEC code word of every 1024 FEC code words carries the first information.

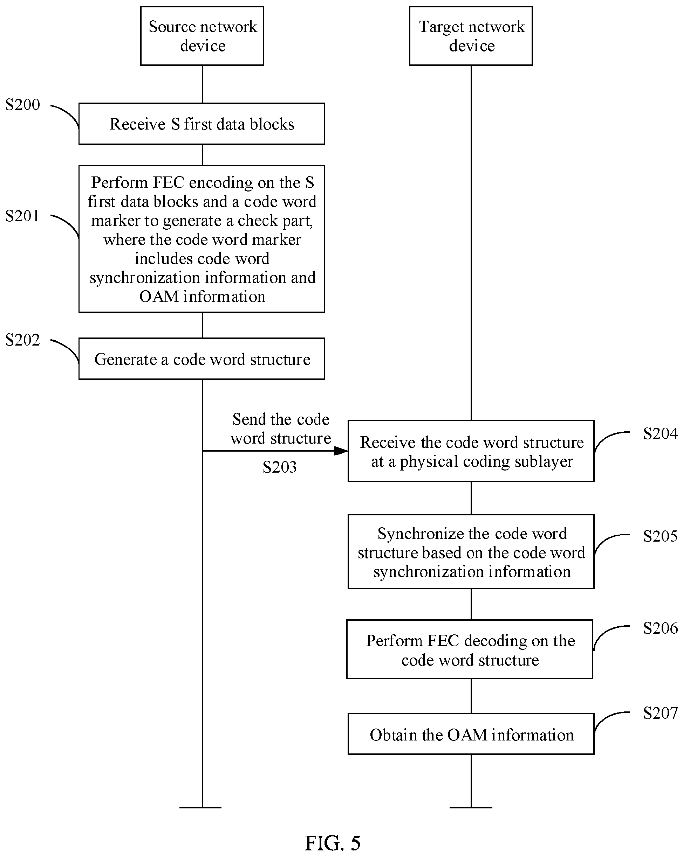

When the source network device performs FEC encoding and the target network device performs FEC decoding, as shown in FIG. 5, the following provides a data encoding and decoding method. The method includes the following steps.

S200: The source network device receives S first data blocks at a physical coding sublayer, where S is a positive integer.

In an embodiment, the first data block may be a 256b/257b data block, which means that a total length of the data block is 257 bits, including 256-bit data and 1-bit indication information.

The first data block may be generated by transcoding four 64b/66b or 64b/65b data blocks. The source network device may perform transcoding to generate the first data block.

In another embodiment, the first data block may alternatively be a data block of another length. For example, the first data block may be a 64b/66b or 64b/65b data block. The 64b/66b data block means that a total length of the data block is 66 bits, including 64-bit data and 2-bit indication information. The 64b/65b data block means that a total length of the data block is 65 bits, including 64-bit data and 1-bit indication information.

S201: The source network device performs FEC encoding on the S first data blocks and first information at the physical coding sublayer to generate a check part, where the first information includes code word synchronization information and operation, administration and maintenance (operation, administration and maintenance, OAM) information, and the S first data blocks and the first information form valid data.

S202: The source network device generates a code word structure at the physical coding sublayer, where the code word structure includes the S first data blocks, the first information, and the check part.

An FEC code type used by the source network device and the target network device is correspondingly provided with an FEC code word length and an FEC payload length, which indicates that in a code word structure generated after encoding is performed by using the FEC code type, a length of a check part is equal to the FEC code word length minus the FEC payload length. The FEC code type may be, for example, a Reed-Solomon (Reed-Solomon, RS) code type. For example, the code type may be an RS (528, 514) code type, and a granularity is 10 bits, indicating that the FEC code word length is 528×10 bits, the FEC payload length is 514×10 bits, and the length of the check part is (528-514)×10 bits. For the RS (528, 514) code type, after FEC encoding is performed on 5140-bit valid data, a 140-bit check part is generated, and the FEC code word length of a generated code word structure is 5280 bits. It may be understood that the FEC code type may also be another code type, which is not limited herein.

It may be understood that the FEC code type may also be expressed in another manner, provided that the FEC code word length and the FEC payload length are indirectly indicated.

The source network device may perform an operation of adding or inserting the first information. To ensure that a line rate does not change, in an embodiment according to the claimed invention, an idle character whose length is the same as a length of the first information is deleted, and the first information is added. Specifically, the source network device may periodically add the first information. For example, the first information may be added once every 1024 code words.

The code word synchronization information is used by the target network device to perform code word synchronization. The OAM information is used for operation, administration, and maintenance of a PON network, and further management and diagnosis of the PON network are implemented.

S203: The source network device sends the code word structure to the target network device.

S204: The target network device receives the code word structure.

S205: The target network device synchronizes the code word structure at the physical coding sublayer based on the code word synchronization information.

S206: The target network device performs FEC decoding on the code word structure.

S207: The target network device obtains the OAM information. Specifically, the OAM information is obtained from the first information. Further, between the source network device and the target network device, functions such as operation, administration, and maintenance of the PON network, and management and diagnosis of the PON network are implemented by using the OAM information.

In an embodiment, the first information further includes first indication information, and the first indication information is used to indicate whether the code word structure includes the OAM information. In code word structures sent by the source network device to the target network device, even if first information is included in some of the code word structures, there may be no OAM information. Therefore, by using the first indication information, a receive end may be notified whether the first information in the current code word structure includes the OAM information.

In an embodiment, the first information further includes second indication information, and the second indication information is used to indicate whether the receive end (that is, the target network device) performs FEC decoding on the code word structure. When the source network device performs FEC encoding, the second indication information instructs the target network device to perform FEC decoding on the code word structure, and the target network device may learn, based on the second indication information, that FEC decoding may be performed on the code word structure. When the source network device does not perform FEC encoding, the second indication information instructs the target network device not to perform FEC decoding on the code word structure, and the target network device may learn, based on the second indication information, that FEC decoding may not be performed on the code word structure.

In an embodiment, a length of the first information may be, for example, 257 bits. It may be understood that the first information may alternatively be of another length. This is not limited herein. Lengths of the code word synchronization information, the OAM information, the first indication information, and the second indication information may be allocated according to an actual requirement.

The following uses an example in which the length of the first information is 257 bits. The first information includes four second data blocks, and a length of each second data block is 64 bits. It may be understood that the second data block herein is defined for ease of the following description, or may be understood as a set of a preset quantity of bits. A length of the first information in the existing 25GE standards is 257 bits, including four alignment markers (alignment marker). A length of each alignment marker is 64 bits. It may be understood that the second data block herein may also be referred to as the alignment marker.

A quantity of second data blocks occupied by the code word synchronization information and the OAM information may be flexibly set according to an actual requirement. For example, one second data block carries the code word synchronization information, and at least one second data block carries the OAM information.

Specifically, in an embodiment, one second data block may be used to carry the code word synchronization information, and one second data block is used as a reserved field. The other two of the second data blocks are used to carry the OAM information. In this case, a valid rate of a management channel is: 25 Gbps×0.5/(1024×20)=610 kbps.

In another embodiment, one second data block may be used to carry the code word synchronization information. In one data block, some bits are used as a reserved field, and some bits are used as an OAM field. A length of the OAM field may be, for example, 32 bits, a length of the reserved field may be, for example, 24 bits, and the other 8 bits may be used as a BIP field. The OAM field and the other two of the data blocks (one is referred to as block0 and the other is referred to as block1) are used to jointly carry the OAM information. The OAM field may be alternatively divided into two parts: part0 and part1, both of which are 16 bits in length. Part0 and block0 may form an OAM message, and part1 and block1 may form another OAM message. A length of each OAM message is 10 bytes. The reserved field may be used to carry the first indication information and the second indication information. Some bits or all bits of the reserved field are used to carry at least one of the first indication information and the second indication information.

In the preceding solution, an FEC synchronization state machine as a whole does not need to be modified, a determination condition for generating cwm_valid is that 48 bits are determined, and other data is not processed. A synchronization solution is consistent with a common 25GE synchronization process, and is therefore compatible with standard 25GE interfaces.

On a basis of an FEC coding scheme that is based on the 25GE standards, this solution implements establishment of an OAM management channel without increasing complexity or introducing an extra power penalty. In addition, the OAM management channel is protected by FEC and has the same performance as a service channel. The service channel is transparently transmitted, and service data is not affected. The OAM management channel is implemented based on FEC coding and can be used to collect service performance statistics.

A format of the OAM information may be, for example, shown in the following table.

| |
|---|
| Message Type = 0xaa |
| OPcode = 0xbb |
| Message Word |
| FCS |

Message Type indicates a message type. A message type may correspond to a plurality of OPcodes. The OPcode indicates a more detailed message type under this message type. Message Word indicates message content. FCS indicates a frame check sequence (frame check sequence).

Specifically, the OAM information may be, for example, a channel configuration message.

| |
|---|
| Message Type = 0x01 |
| OPcode = 0x01 |
| Channel No. |
| FCS |

The OAM information may be, for example, a channel indication message.

| |
|---|
| Message Type = 0x01 |
| OPcode = 0x02 |
| Channel No. |
| FCS |

The OAM information may be, for example, a channel confirmation message.

| |
|---|
| Message Type = 0x01 |
| OPcode = 0x03 |
| Channel No. |
| FCS |

The message types of the foregoing three types of OAM information are channel type messages, and the OPcode is 0x01 (indicating a channel configuration message), 0x02 (indicating a channel indication message), and 0x01 (indicating a channel confirmation message) separately. Channel No. indicates a channel number.

The OAM information may be, for example, a status query message.

| |
|---|
| Message Type = 0x02 |
| OPcode = 0x01 |
| Module Status Request |
| FCS |

Module Status Request indicates a module status information request, which indicates that a peer end is requested to send a current module status.

The OAM information may be, for example, a status recovery message.

| |
|---|
| Message Type = 0x01 |
| OPcode = 0x01 |
| Module Status Report |
| FCS |

Module Status Report indicates a module status information report, which indicates that a current module status is reported to the peer end.

The OAM information may be, for example, a link performance query message.

| |
|---|
| Message Type = 0x01 |
| OPcode = 0x01 |
| Link BER. Request |
| FCS |

Link BER. Request indicates a link bit error request, which indicates that the peer end is requested to send information about a current bit error rate.

The OAM information may be, for example, a performance recovery message.

| |
|---|
| Message Type = 0x01 |
| OPcode = 0x01 |
| Link BER. Report |
| FCS |

Link BER. Report indicates a link bit error report, which indicates that information about a current bit error rate is reported to the peer end.

It may be understood that the foregoing OAM message formats are examples, and are not intended to limit the protection scope of this application. The OAM message format may also be another format. Specific values of the foregoing Message Type and Opcode may also be other values, which are not limited herein. The foregoing tables are examples.

The first communications device and the second communications device do not perform FEC encoding and decoding. FEC encoding and decoding is uniformly performed at a WDM PON layer, and the code word synchronization information and the OAM information are inserted, which does not affect a link rate. Considering interworking, a reserved field in the first information is used for indication, to notify an ONU or an OLT whether the first communications device or the second communications device has performed FEC. If FEC is not performed on 25GE of the first communications device and 25GE of the second communications device, the ONU side or the OLT side needs to restore the original 66-bit stream after terminating OAM, and then forward the original 66-bit stream to the first communications device or the second communications device.

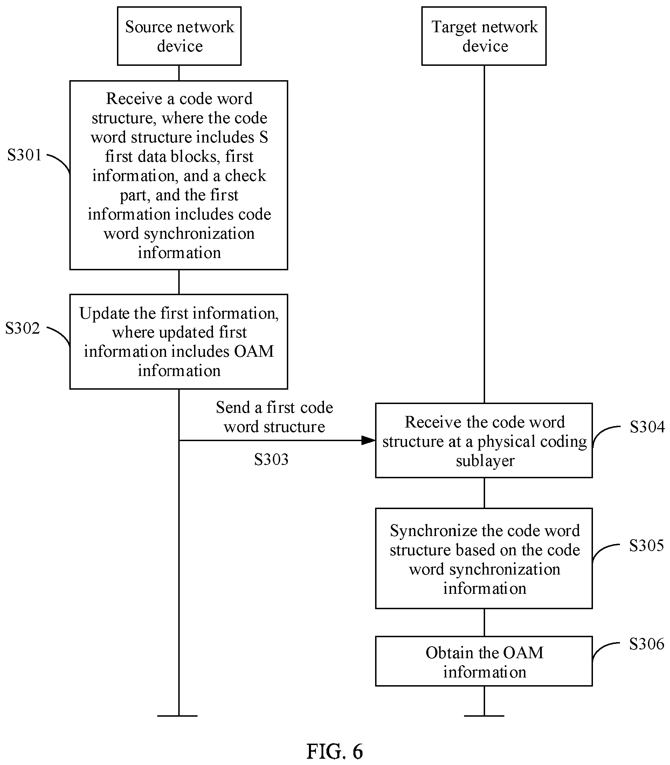

When the source network device does not need to perform FEC encoding, as shown in FIG. 2, for example, when the OLT is the source network device, and the first communications device performs FEC encoding, and sends a code word structure generated after FEC encoding to the source network device, then the OLT does not need to perform FEC encoding, and the ONU does not need to perform FEC decoding either. The second communications device performs FEC decoding. The following provides a data processing method. As shown in FIG. 6, the method includes the following steps.

S301: The source network device receives a code word structure at a physical coding sublayer, where the code word structure includes S first data blocks, first information, and a check part, and the first information includes code word synchronization information.

S302: The source network device updates the first information at the physical coding sublayer, where updated first information includes OAM information.

S303: The source network device sends the code word structure to the target network device.

S304: The target network device receives the code word structure.

S305: The target network device synchronizes the code word structure at the physical coding sublayer based on the code word synchronization information.

S306: The target network device obtains the OAM information at the physical coding sublayer. Further, between the source network device and the target network device, functions such as operation, administration, and maintenance of a PON network, and management and diagnosis of the PON network are implemented by using the OAM information.

To ensure that a line rate does not change, a manner of updating the code word structure, according to an embodiment of the claimed invention, is: deleting a reserved character in the first information, and then inserting the OAM information. A quantity of bits of the deleted character is the same as a quantity of bits inserted.

For example, in the system architecture shown in FIG. 2, downstream transmission is used as an example, and a 25GE system is used as an example. The first communications device 13 sends a code word structure to the OLT. First information (which may be referred to as a code word marker in 25GE) in the code word structure includes four alignment markers, and only one of the alignment markers may be used to carry code word synchronization information. In this way, for the first communications device 13, an original communications protocol may not be changed, and an original encoding manner may not be changed either.

The OLT may update OAM information to all or some of the other three alignment markers. For example, the OAM information may be updated to two of the alignment markers. For example, original characters in the last two alignment markers are deleted, and the OAM information is inserted into the two alignment markers.

After receiving the code word structure, the ONU obtains the OAM information in the code word structure.

The ONU may delete the OAM information in the code word structure, and replace the OAM information with an original reserved character (that is, a reserved character deleted when the OLT updates the code word structure). Alternatively, the second communications device 16 may delete the OAM information in the code word structure, and replace the OAM information with the original reserved character.

For the second communications device 16, synchronization is still performed based on the code word synchronization information in one of the alignment markers, an original communications protocol is not changed, and an original decoding manner is not changed either. The second communications device 16 performs FEC decoding on an after-replacement code word structure.

Updated first information may further include first indication information, and the first indication information is used to indicate whether the code word structure includes the OAM information.

According to an embodiment of the claimed invention, the updated first information further includes second indication information, and the second indication information is used to indicate whether a receive end performs FEC decoding on the code word structure.

For specific details of the first information in this embodiment and other details in this embodiment, refer to the details of the embodiment shown in FIG. 5. Details are not described herein again.

In another embodiment, FEC enabling or FEC disabling of a WDM PON device remains consistent with 25GE of a wireless device. In a scenario without FEC, code word synchronization information and OAM information may be periodically inserted in a manner of deleting idle, but transcoding and FEC are not performed. An insertion period of the code word synchronization information and the OAM information is the same as that in the foregoing solution, and an FEC indication field is also reserved to notify an ONU whether to enable FEC. After receiving data, the ONU obtains the code word synchronization information and OAM information, and replaces the OAM information with Idle.

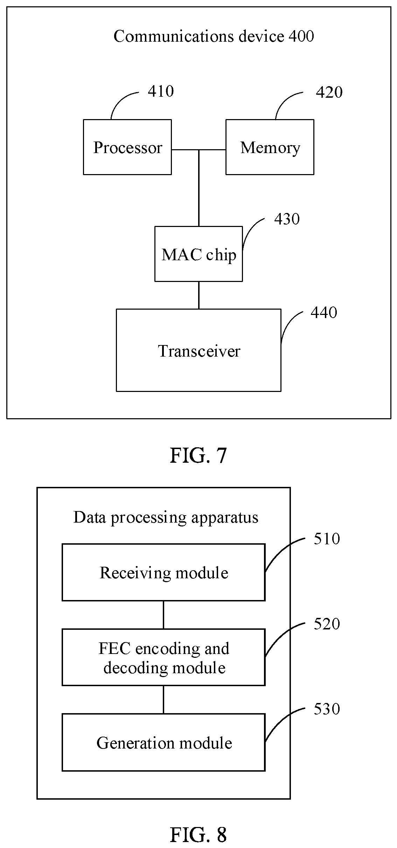

This application further provides a communications device 400. The communications device 400 may be either of the communications devices (11 and 12) shown in FIG. 1, may be the PON OLT device 14 or the PON ONU device 15 shown in FIG. 2, or may be the PON central office device 101 or the PON terminal device 103 shown in FIG. 3. As shown in FIG. 7, the communications device 400 includes a processor 410, a memory 420, a medium access control (medium access control, MAC) chip 430, and a transceiver 440.

The processor 410 may be a general-purpose central processing unit (Central Processing Unit, CPU), a microprocessor, an application-specific integrated circuit ASIC, or at least one integrated circuit, and is configured to execute a related program, to implement the technical solutions provided in the embodiments of this application.

The memory 420 may be a read only memory (Read Only Memory, ROM), a static storage device, a dynamic storage device, or a random access memory (Random Access Memory, RAM). The memory 420 may store an operating system and another application program. When the technical solutions provided in the embodiments of this application are implemented by using software or firmware, program code used to implement the technical solutions provided in the embodiments of this application is stored in the memory 420, and is executed by the processor 410.

In an embodiment, the processor 410 may internally include the memory 420. In another embodiment, the processor 410 and the memory 420 are two independent structures.

In an embodiment, the processor 410 and the MAC chip 430 may be two independent structures. In another embodiment, the processor 410 may include the MAC chip 430. The MAC chip 430 may include a physical coding sublayer and a MAC control sublayer.

The transceiver 440 may include an optical transmitter and/or an optical receiver. The optical transmitter may be configured to send an optical signal, and the optical receiver may be configured to receive an optical signal. The optical transmitter may be implemented by using a light emitting device, such as a gas laser, a solid state laser, a liquid laser, a semiconductor laser, or a direct modulated laser. The optical receiver may be implemented by using an optical detector, such as a photodetector or a photodiode (such as an avalanche photodiode). The transceiver 440 may further include a digital-to-analog converter and an analog-to-digital converter.

The MAC chip 430 or the processor 410 may perform steps of the physical coding sublayer.

It can be learned from the foregoing embodiments that when the communications device 400 is used as a source network device, the MAC chip 430 or the processor 410 is configured to perform steps S200, S201, S202, S203, S301, S302, and S303.

When the communications device 400 is used as a target network device, the MAC chip 430 or the processor 410 is configured to perform steps S204, S205, S206, S207, S304, S305, and S306.

For more details about the processor 410 and the MAC chip 430 performing the foregoing steps at the physical coding sublayer, refer to related descriptions of the embodiments of the foregoing method and the accompanying drawings. Details are not described herein again.

This embodiment of this application also has various beneficial effects described in the foregoing method embodiments, and details are not described herein again.

This application further provides a data processing apparatus. The apparatus may be integrated into the communications device 400 in the foregoing embodiment. For example, the apparatus may be integrated into the MAC chip of the communications device 400, integrated into the processor, or integrated into a DSP chip. As shown in FIG. 8, the apparatus includes a receiving module 510, an FEC encoding and decoding module 520, and a generation module 530.

It can be learned from the foregoing embodiments that the receiving module 510 is configured to perform step S200, the FEC encoding and decoding module 520 is configured to perform step S201, and the generation module 530 is configured to perform step S202.

The apparatus further includes a sending module, configured to perform step S203.

The apparatus further includes a transcoding module, and the transcoding module is configured to perform a transcoding operation.

For more details about the modules of the apparatus performing the foregoing steps, refer to related descriptions of the embodiments of the foregoing method and the accompanying drawings. Details are not described herein again.

This embodiment of this application also has various beneficial effects described in the foregoing method embodiments, and details are not described herein again.

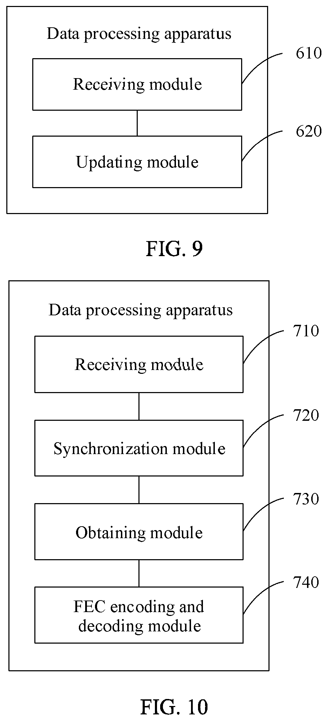

This application further provides a data processing apparatus. The apparatus may be integrated into the communications device 400 in the foregoing embodiment. For example, the apparatus may be integrated into the MAC chip of the communications device 400, integrated into the processor, or integrated into a DSP chip. As shown in FIG. 9, the apparatus includes a receiving module 610 and an updating module 620.

It can be learned from the foregoing embodiments that the receiving module 610 is configured to perform step S301, and the updating module 620 is configured to perform step S302.

The apparatus further includes a sending module, configured to perform step S303.

For more details about the modules of the apparatus performing the foregoing steps, refer to related descriptions of the embodiments of the foregoing method and the accompanying drawings. Details are not described herein again.

This embodiment of this application also has various beneficial effects described in the foregoing method embodiments, and details are not described herein again.

This application further provides a data processing apparatus. The apparatus may be integrated into the communications device 400 in the foregoing embodiment. For example, the apparatus may be integrated into the MAC chip of the communications device 400, integrated into the processor, or integrated into a DSP chip. As shown in FIG. 10, the apparatus includes a receiving module 710, a synchronization module 720, and an obtaining module 730.

It can be learned from the foregoing embodiments that the receiving module 710 is configured to perform steps S204 and S304, the synchronization module 720 is configured to perform steps S205 and S305, and the obtaining module 730 is configured to perform steps S207 and S306.

The apparatus further includes an FEC encoding and decoding module 740, configured to perform step S206.

For more details about the modules of the apparatus performing the foregoing steps, refer to related descriptions of the embodiments of the foregoing method and the accompanying drawings. Details are not described herein again.

This embodiment of this application also has various beneficial effects described in the foregoing method embodiments, and details are not described herein again.

This application further provides an optical line terminal. The optical line terminal includes the data processing apparatus in any one of the foregoing embodiments.

This application further provides an optical network unit. The optical network unit includes the data processing apparatus in any one of the foregoing embodiments.

This application further provides a PON system. The system includes the foregoing optical line terminal and optical network unit.

This application further provides a communications system. The system includes the foregoing communications devices. For example, the system includes the foregoing communications device used as the source network device and the communications device used as the target network device.

This application further provides a communications system. The system includes the first communications device, the OLT, the ONU, and the second communications device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

In summary, what is described above is merely embodiments of the technical solutions of this application, but is not intended to limit the protection scope of this application.

## Claims

1. A data processing method, wherein the method comprises:
receiving S first data blocks at a physical coding sublayer, wherein S is a positive integer;
performing, at the physical coding sublayer, FEC encoding on the S first data blocks and first information to generate a check part, wherein the first information comprises code word synchronization information and operation, administration and maintenance, OAM, information;
generating a code word structure at the physical coding sublayer, wherein the code word structure comprises the S first data blocks, the first information, and the check part; and
sending the code word structure,
wherein
the first information further comprises second indication information, and the second indication information is used to indicate whether a receive end performs FEC decoding on the code word structure, and
the step of performing FEC encoding further comprises deleting an idle character being comprised in the first data blocks, wherein a length of the deleted idle character is the same as a length of the piece of first information.

2. The method according to claim 1, wherein the first information further comprises first indication information, and the first indication information is used to indicate whether the code word structure comprises the OAM information.

3. The method according to any one of claims 1 to 2, wherein the first information comprises four second data blocks, and a length of each second data block is 64 bits; one second data block carries the code word synchronization information; and at least one second data block carries the OAM information.

4. The method according to claim 3, wherein one second data block comprises a reserved field and an OAM field, and the OAM field and the other two of the second data blocks jointly carry the OAM information.

5. A data processing apparatus, wherein the apparatus comprises:
a receiving module (510; 610; 710), configured to receive S first data blocks at a physical coding sublayer, wherein S is a positive integer;
an FEC encoding and decoding module (520; 740), configured to perform FEC encoding on the S first data blocks and first information at the physical coding sublayer to generate a check part, wherein the first information comprises code word synchronization information and operation, administration and maintenance, OAM, information;
a generation module (530), configured to generate a code word structure at the physical coding sublayer, wherein the code word structure comprises the S first data blocks, the first information, and the check part; and
a sending module, configured to send the code word structure,
wherein
the first information further comprises second indication information, and the second indication information is used to indicate whether FEC decoding is to be performed on the code word structure, and
performing FEC encoding further comprises deleting an idle character being comprised in the S first data blocks, wherein a length of the deleted idle character is the same as a length of the piece of first information.

6. A communications system, wherein the communications system (100) comprises the data processing apparatus according to claim 5 and a data processing apparatus comprising:
a receiving module (510; 610; 710), configured to receive a code word structure at a physical coding sublayer, wherein the code word structure comprises S first data blocks, first information, and a check part, and the first information comprises code word synchronization information and operation, administration and maintenance, OAM, information;
a synchronization module (720), configured to synchronize the code word structure at the physical coding sublayer based on the code word synchronization information; and
an obtaining module (730), configured to obtain the OAM information at the physical coding sublayer,
wherein
the first information further comprises second indication information, and the second indication information is used to indicate whether FEC decoding is to be performed on the code word structure; and
the apparatus further comprises:
an FEC encoding and decoding module (520; 740) configured to perform FEC decoding on the code word structure if it is indicated by the second indication information that FEC decoding is to be performed on the code word structure.

## Patentansprüche

1. Verfahren zur Datenverarbeitung, wobei das Verfahren Folgendes umfasst:
Empfangen von S ersten Datenblöcken auf einer physischen Codierungsunterschicht, wobei S eine positive Ganzzahl ist;
Durchführen einer FEC (Forward Error Correction (Vorwärtsfehlerkorrektur))-Codierung der S ersten Datenblöcke und ersten Informationen auf der physischen Codierungsunterschicht, um einen Prüfteil zu erzeugen, wobei die ersten Informationen Codewort-Synchronisierungsinformationen und Betriebs-, Verwaltungs- und Wartungs (operation, administration and maintenance, OAM)-Informationen umfassen;
Erzeugen einer Codewortstruktur auf der physischen Codierungsunterschicht, wobei die Codewortstruktur die S ersten Datenblöcke, die ersten Informationen und den Prüfteil umfasst; und
Senden der Codewortstruktur,
wobei
die ersten Informationen ferner zweite Anzeigeinformationen umfassen, und die zweiten Anzeigeinformationen dazu verwendet werden, anzuzeigen, ob ein Empfangsende eine FEC-Decodierung der Codewortstruktur durchführt, und
der Schritt des Durchführens der FEC-Codierung ferner Löschen eines in den S ersten Datenblöcken umfassten Leerzeichens umfasst, wobei eine Länge des gelöschten Leerzeichens die gleiche ist wie eine Länge des Teils der ersten Informationen.

2. Verfahren gemäß Anspruch 1, wobei die ersten Informationen ferner erste Anzeigeinformationen umfassen und die ersten Anzeigeinformationen dazu verwendet werden, anzuzeigen, ob die Codewortstruktur die OAM-Informationen umfasst.

3. Verfahren gemäß einem der Ansprüche 1 bis 2, wobei die ersten Informationen vier zweite Datenblöcke umfassen und die Länge jedes zweiten Datenblocks 64 Bit beträgt; ein zweiter Datenblock die Codewort-Synchronisierungsinformationen enthält; und mindestens ein zweiter Datenblock die OAM-Informationen enthält.

4. Verfahren gemäß Anspruch 3, wobei ein zweiter Datenblock ein reserviertes Feld und ein OAM-Feld umfasst und das OAM-Feld und die beiden anderen der zweiten Datenblöcke gemeinsam die OAM-Informationen enthalten.

5. Vorrichtung zur Datenverarbeitung, wobei die Vorrichtung Folgendes umfasst:
ein Empfangsmodul (510; 610; 710), das dazu konfiguriert ist, S erste Datenblöcke auf einer physischen Codierungsunterschicht zu empfangen, wobei S eine positive Ganzzahl ist;
ein FEC-Codier- und Decodiermodul (520; 740), das dazu konfiguriert ist, eine FEC-Codierung der S ersten Datenblöcke und ersten Informationen auf der physischen Codierungsunterschicht durchzuführen, um einen Prüfteil zu erzeugen, wobei die ersten Informationen Codewort-Synchronisierungsinformationen und Betriebs-, Verwaltungs- und Wartungs (OAM)-Informationen umfassen;
ein Erzeugungsmodul (530), das dazu konfiguriert ist, eine Codewortstruktur auf der physischen Codierungsunterschicht zu erzeugen, wobei die Codewortstruktur die S ersten Datenblöcke, die ersten Informationen und den Prüfteil umfasst; und
ein Sendemodul, das konfiguriert ist, die Codewortstruktur zu senden,
wobei
die ersten Informationen ferner zweite Anzeigeinformationen umfassen, und die zweiten Anzeigeinformationen dazu verwendet werden, anzuzeigen, ob eine FEC-Decodierung der Codewortstruktur durchzuführen ist, und
Durchführen der FEC-Codierung ferner Löschen eines in den S ersten Datenblöcken umfassten Leerzeichens umfasst, wobei eine Länge des gelöschten Leerzeichens die gleiche ist wie eine Länge des Teils der ersten Informationen.

6. Kommunikationssystem, wobei das Kommunikationssystem (100) die Vorrichtung zur Datenverarbeitung gemäß Anspruch 5 umfasst und eine Vorrichtung zur Datenverarbeitung Folgendes umfasst:
ein Empfangsmodul (510; 610; 710), das dazu konfiguriert ist, eine Codewortstruktur auf einer physischen Codierungsunterschicht zu empfangen, wobei die Codewortstruktur S erste Datenblöcke, erste Informationen und einen Prüfteil umfasst und die ersten Informationen Codewort-Synchronisierungsinformationen und Betriebs-, Verwaltungs- und Wartungs (OAM)-Informationen umfassen;
ein Synchronisierungsmodul (720), das dazu konfiguriert ist, die Codewortstruktur auf der physischen Codierungsunterschicht basierend auf den Codewort-Synchronisierungsinformationen zu synchronisieren; und
ein Erlangungsmodul (730), das dazu konfiguriert ist, die OAM-Informationen auf der physischen Codierungsunterschicht zu erlangen,
wobei
die ersten Informationen ferner zweite Anzeigeinformationen umfassen, und die zweiten Anzeigeinformationen dazu verwendet werden, anzuzeigen, ob eine FEC-Decodierung der Codewortstruktur durchzuführen ist; und
die Vorrichtung ferner Folgendes umfasst:
ein FEC-Codier- und Decodiermodul (520; 740), das dazu konfiguriert ist, eine FEC-Decodierung der Codewortstruktur durchzuführen, wenn durch die zweiten Anzeigeinformationen angezeigt wird, dass eine FEC-Decodierung der Codewortstruktur durchzuführen ist.

## Revendications

1. Procédé de traitement de données, dans lequel le procédé comprend :
la réception de S premiers blocs de données au niveau d'une sous-couche de codage physique, dans lequel S est un entier positif ;
la réalisation, au niveau de la sous-couche de codage physique, d'un codage FEC sur les S premiers blocs de données et les premières informations pour générer une partie de contrôle, dans lequel les premières informations comprennent des informations de synchronisation de mots de code et des informations d'exploitation, d'administration et de maintenance, OAM ;
la génération d'une structure de mots de code au niveau de la sous-couche de codage physique, dans lequel la structure de mots de code comprend les S premiers blocs de données, les premières informations et la partie de contrôle ; et
l'envoi de la structure de mots de code,
dans lequel
les premières informations comprennent également de secondes informations d'indication, et les secondes informations d'indication sont utilisées pour indiquer si une extrémité de réception effectue un décodage FEC sur la structure de mots de code, et
l'étape de réalisation du codage FEC comprend également la suppression d'un caractère inactif compris dans les S premiers blocs de données, dans lequel une longueur du caractère inactif supprimé est la même qu'une longueur du morceau de première information.

2. Procédé selon la revendication 1, dans lequel les premières informations comprennent également de premières informations d'indication, et les premières informations d'indication sont utilisées pour indiquer si la structure de mots de code comprend les informations OAM.

3. Procédé selon l'une quelconque des revendications 1 et 2, dans lequel les premières informations comprennent quatre seconds blocs de données, et une longueur de chaque second bloc de données est de 64 bits ; un second bloc de données transporte les informations de synchronisation de mots de code ; et au moins un second bloc de données transporte les informations OAM.

4. Procédé selon la revendication 3, dans lequel un second bloc de données comprend un champ réservé et un champ OAM, et le champ OAM et les deux autres des seconds blocs de données transportent conjointement les informations OAM.

5. Appareil de traitement de données, dans lequel l'appareil comprend :
un module de réception (510 ; 610 ; 710), configuré pour recevoir S premiers blocs de données au niveau d'une sous-couche de codage physique, dans lequel S est un entier positif ;
un module de codage et de décodage FEC (520 ; 740), configuré pour effectuer un codage FEC sur les S premiers blocs de données et les premières informations au niveau d'une sous-couche de codage physique pour générer une partie de contrôle, dans lequel les premières informations comprennent des informations de synchronisation de mots de code et des informations d'exploitation, d'administration et de maintenance, OAM ;
un module de génération (530), configuré pour générer une structure de mots de code au niveau de la sous-couche de codage physique, dans lequel la structure de mots de code comprend les S premiers blocs de données, les premières informations et la partie de contrôle ; et
un module d'envoi, configuré pour envoyer la structure de mots de code,
dans lequel
les premières informations comprennent également de secondes informations d'indication, et les secondes informations d'indication sont utilisées pour indiquer si un décodage FEC doit être effectué sur la structure de mots de code, et
la réalisation du codage FEC comprend également la suppression d'un caractère inactif compris dans les S premiers blocs de données, dans lequel une longueur du caractère inactif supprimé est la même qu'une longueur du morceau de première information.

6. Système de communication, dans lequel le système de communication (100) comprend l'appareil de traitement de données selon la revendication 5 et un appareil de traitement de données comprenant :
un module de réception (510 ; 610 ; 710), configuré pour recevoir une structure de mots de code au niveau d'une sous-couche de codage physique, dans lequel la structure de mots de code comprend S premiers blocs de données, des premières informations et une partie de contrôle, et les premières informations comprennent des informations de synchronisation de mots de code et des informations d'exploitation, d'administration et de maintenance, OAM ;
un module de synchronisation (720), configuré pour synchroniser la structure de mots de code au niveau de la sous-couche de codage physique sur la base des informations de synchronisation de mots de code ; et
un module d'obtention (730), configuré pour obtenir les informations OAM au niveau de la sous-couche de codage physique, dans lequel
les premières informations comprennent également des secondes informations d'indication, et les secondes informations d'indication sont utilisées pour indiquer si un décodage FEC doit être effectué sur la structure de mots de code ; et
l'appareil comprend également :
un module de codage et de décodage FEC (520 ; 740) configuré pour effectuer un décodage FEC sur la structure de mots de code s'il est indiqué par les secondes informations d'indication que le décodage FEC doit être effectué sur la structure de mots de code.
